# FASCICULE DE BREVET EUROPEEN

(11) **EP 1 114 289 B1**
(45) Date de publication et mention de la délivrance du brevet: **09.04.2003**
(21) Numéro de dépôt: 00907706.6
(22) Date de dépôt: 23.02.2000
(51) Int. Cl.: F27B 9/06, F23D 14/18

(54) **EQUIPEMENT DE CHAUFFAGE PAR EMISSION SURFACIQUE D'UN RAYONNEMENT INFRAROUGE, DU TYPE TUNNEL**
TUNNEL-HEIZAUSRÜSTUNG ZUR OBERFLÄCHENEMISSION VON INFRAROTSTRAHLUNG
TUNNEL TYPE HEATING EQUIPMENT FOR SURFACE TRANSMISSION OF INFRARED RADIATION

(30) Priorité: 25.03.1999 FR 9903904
(43) Date de publication de la demande: 11.07.2001
(73) Titulaire: Sunkiss, 69580 Sathonay Camp (FR)
(72) Inventeur: CHARMES, Michel, 69370 St Didier au Mont d'Or (FR); ROGEMOND, Eric, 38290 Satolas et Bonce (FR)
(74) Mandataire: Guerre, Dominique
(86) Numéro de dépôt international: FR0000453
(87) Numéro de publication internationale: WO00058678

(56) Documents cités:
- EP-A- 0 261 462
- EP-A- 0 390 231
- WO-A-98/12476
- US-A- 2 474 301
- US-A- 5 586 877

## Description

La présente invention concerne un équipement d'émission surfacique d'un rayonnement infrarouge, tel qu'utilisé par exemple pour sécher et/ou polymériser des peintures, mastics, vernis, colles, etc..., ou préchauffer une matière plastique avant thermoformage.

A titre d'exemple, mais non exclusivement, l'invention concerne les installations du type tunnel, comprenant une paroi isolée thermiquement et formant un tunnel allongé selon une direction de séjour ou passage d'au moins un objet à traiter avec ledit rayonnement infrarouge. Ces installations comportent en général une pluralité d'équipements unitaires ou modules d'émission surfacique, disposés chacun par rapport à et dans la paroi isolée thermiquement, en sorte que leurs faces respectives émettant le rayonnement infrarouge soient dirigées vers l'intérieur du tunnel.

Comme montré par le document US-C-5 586 877, un tel équipement ou module d'émission surfacique comprend un ou plusieurs dispositifs d'émission surfacique. Chaque dit dispositif comprend un foyer de combustion catalytique comportant une paroi de combustion catalytique, en matériau réfractaire, perméable selon son épaisseur, adaptée pour le passage d'un mélange à brûler (gaz combustible, par exemple gaz naturel, plus gaz comburant, par exemple air), de sa face amont à sa face aval émettant ledit rayonnement infrarouge et évacuant les fumées de combustion. La surface développée interne de la paroi de combustion catalytique est revêtue par une matière catalytique de combustion, par exemple platine et/ou palladium. Le foyer de combustion comprend une chambre amont alimentée d'un côté en mélange à brûler, et fermée de l'autre côté par la paroi de combustion catalytique. Et le dispositif d'émission surfacique comprend un boîtier dans lequel le foyer de combustion catalytique est disposé au moins pour partie et dans lequel est ménagée une fenêtre au regard de la face aval de la paroi de combustion catalytique.

Pour une installation telle que précédemment définie, la présente invention a pour objet différentes dispositions coopérant les unes avec les autres, en vue de récupérer et consommer au moins une partie importante de la chaleur résiduelle présente dans les fumées de combustion de chaque équipement, ou des différents équipements unitaires d'émission surfacique.

Selon la présente invention, l'équipement d'émission surfacique comporte, en combinaison, les caractéristiques suivantes :
- au moins une vitre en matériau céramique et transparent, est montée, par exemple dans le boîtier du dispositif d'émission surfacique, en sorte de ménager avec le foyer de combustion catalytique un circuit d'évacuation des fumées de combustion sortant par la face aval du dispositif d'émission surfacique ;
- et l'équipement comprend une tôle métallique d'émission surfacique secondaire formant un canal de circulation à plat des fumées de combustion, communiquant d'un côté avec le circuit d'évacuation des fumées de combustion du dispositif d'émission surfacique, et d'un autre côté avec au moins un conduit de sortie des fumées de combustion à l'extérieur de l'équipement.

Grâce à ces dispositions, le ou les objets à traiter reçoivent un rayonnement thermique secondaire, s'ajoutant au rayonnement principal infrarouge, émis par un équipement selon l'invention.

La présente invention est maintenant décrite par référence au dessin annexé, dans lequel :
- la **Figure 1** représente, en coupe et de manière schématique, un dispositif unitaire d'émission surfacique, comprenant un dispositif d'émission surfacique avec un foyer de combustion catalytique, selon un premier mode d'exécution de la présente invention ;
- la **Figure 2** représente, de manière schématique et en coupe transversale, une installation d'émission surfacique d'un rayonnement infrarouge, du type tunnel, et intégrant ou comprenant une pluralité d'équipements unitaires, chacun avec un dispositif d'émission surfacique conforme à la Figure 1 ;
- la **Figure 3** représente, toujours de manière schématique et en coupe transversale, une autre installation d'émission surfacique du type tunnel, intégrant ou comprenant une pluralité d'équipements unitaires, chacun avec un dispositif d'émission surfacique ;
- la **Figure 4** représente, toujours en coupe et de manière schématique, une autre installation d'émission surfacique, du type tunnel, comprenant ou intégrant une pluralité d'équipements unitaires, chacun avec un dispositif d'émission surfacique conforme à la Figure 1 ;
- La **Figure 5** représente, vue en coupe et de manière schématique, un dispositif d'émission surfacique selon un deuxième mode d'exécution de la présente invention ;
- La **Figure 6** représente, vue en coupe et de manière schématique, un équipement unitaire d'émission surfacique, intégrant un dispositif selon la Figure 5.

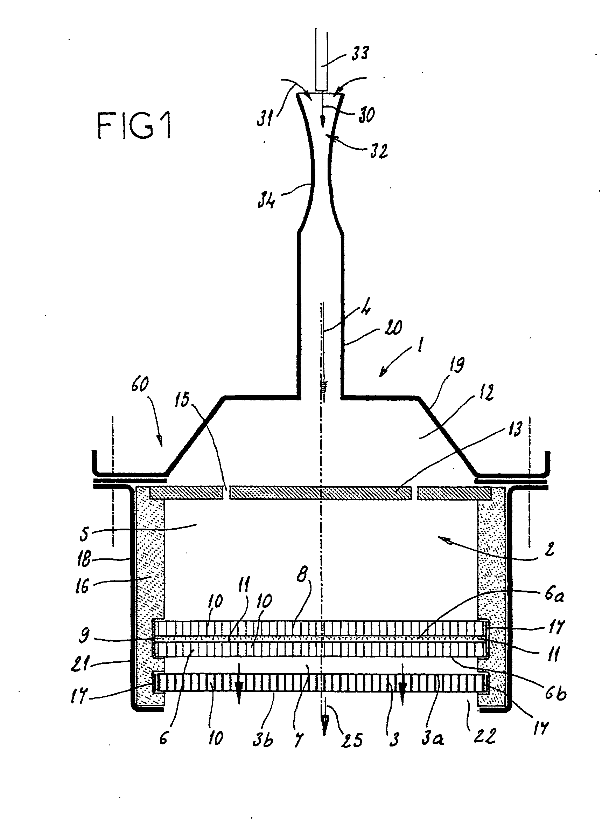

Selon une première possibilité, on met en oeuvre une pluralité ou multiplicité d'équipements unitaires 60 d'émission surfacique, dont le dispositif d'émission surfacique 1 est conforme à un premier mode d'exécution représenté à la Figure 1.

Conformément à la Figure 1, un équipement unitaire 60 comprend un dispositif 1 d'émission surfacique d'un rayonnement infrarouge, lequel consiste pour l'essentiel en un foyer 2 de combustion catalytique, un moyen 32 de formation ou obtention du mélange à brûler, et un boîtier 21 dans lequel le foyer de combustion 2 est disposé au moins pour partie.

Le foyer de combustion 2 est organisé et construit autour de trois parois, 3,6 et 8, identiques ou non, ayant par exemple une forme rectangulaire, en matériau réfractaire, perméables selon leur épaisseur, et adaptées chacune pour le passage du mélange à brûler 4, de leur face amont à leur face aval, selon le sens de circulation dudit mélange à brûler. Ces trois parois, 3,6 et 8, sont constituées chacune par une galette de matériau céramique réfractaire, par exemple en cordiérite, traversée de sa face amont à sa face aval, toujours selon le sens de passage du mélange à brûler 4, par une multiplicité de canaux 10 parallèles ; à titre d'exemple, il s'agit d'une galette en matériau du type "nid d'abeille", tel que vendu par différents fabricants, comme CORNING sous la dénomination CELCOR®, et utilisé par exemple dans les pots de combustion catalytique de gaz d'échappement de moteurs thermiques.

De l'amont vers l'aval, par rapport au sens de circulation du mélange à brûler 4, ces parois sont successivement :
- une paroi 3 de combustion catalytique du mélange à brûler 4, dont la surface développée interne est revêtue par une matière catalytique de combustion, par exemple un dépôt en mélange de platine et de palladium, sur le matériau réfractaire de ladite paroi 3 de combustion catalytique, par l'intermédiaire ou non d'une couche ou revêtement d'un autre matériau minéral à grande surface développée, par exemple en alumine ;
- un échangeur thermique, ou paroi d'échange thermique 6, disposée en amont et en vis à vis de la paroi 3 de combustion catalytique ;
- et une paroi 8 d'isolation thermique, disposée à distance, en amont et en vis à vis de la paroi d'échange thermique 6.

Ces trois parois, 3, 6 et 8, superposées et alignées selon l'axe 4 du dispositif, sont montées transversalement 2 par rapport audit foyer, et précisément par rapport à sa chemise intérieure 16, réfractaire et isolante, par l'intermédiaire d'un joint d'étanchéité 17, entre la tranche périphérique de chaque paroi ou galette 3, 6 ou 8, et ladite chemise 16.

Le foyer de combustion 2 est disposé au moins pour partie, sinon en totalité, dans un boîtier 21, ménageant au moins une fenêtre 22 au regard de la face aval 3b de la paroi 3 de combustion catalytique, au travers de laquelle le rayonnement infrarouge est émis à partir de la face aval 3b de la paroi 3.

Le boîtier 21 comprend un corps 18 fermé par un couvercle 19, monté en regard d'une cloison 13, parallèle aux parois 6, 8 et 10, elles-mêmes parallèles entre elles. Une multiplicité de passages 15 de détente du mélange à brûler 4 sont disposés dans cette cloison 13, séparant d'un côté, c'est à dire du côté amont, une chambre 12 de distribution du mélange à brûler 4, et de l'autre côté, c'est à dire du côté aval, une chambre dite amont 5, par rapport à la paroi 3 de combustion catalytique, toujours selon le sens de circulation du mélange à brûler 4.

La chambre amont 5 est alimentée d'un côté, à partir de la cloison 13 de détente, en mélange à brûler, et est fermée de l'autre côté par la paroi 3 de combustion catalytique. La paroi d'échange thermique 6, disposée en amont et en vis à vis de la paroi 3 de combustion catalytique, reçoit en fonctionnement par sa face aval 6b au moins la majeure partie de la chaleur rayonnée par la face amont 3a de la paroi 3 de combustion catalytique, au travers de laquelle circule le mélange à brûler, et au sein de laquelle s'effectue la combustion catalytique dudit mélange. Cette paroi 6 d'échange thermique est disposée seulement dans la chambre amont 5, et détermine avec la paroi 3 de combustion catalytique un interstice 7 intercalaire, séparé du reste de la chambre amont 5 par cette paroi d'échange thermique 6.

La paroi d'isolation thermique 8 est disposée en amont et en vis à vis de la paroi 6 d'échange thermique, toujours transversalement dans la chambre amont 5, pour déterminer avec la paroi 6 un interstice intermédiaire 9, séparé du reste de la chambre amont 5 par cette paroi d'isolation thermique 8. Un diffuseur 11 du mélange à brûler 4 est disposé transversalement dans l'interstice intermédiaire 9. Ce diffuseur comprend une feuille perméable au mélange à brûler, en matériau réfractaire, par exemple papier ou mousse céramique.

La paroi d'isolation thermique 8 et le diffuseur 11 peuvent être un seul et même composant, par exemple une paroi en mousse céramique, accolée ou non à la paroi 6 d'échange thermique.

Comme le montre bien la Figure 1, la paroi 6 d'échange thermique et la paroi 8 d'isolation thermique ont pratiquement la même surface que la surface aval 3b, rayonnante de la paroi 3 de combustion catalytique, c'est à dire que la surface utile de cette dernière.

La paroi 6 d'échange thermique a le cas échéant une épaisseur supérieure à celle des parois 3 et 8, en fonction du degré de réchauffement recherché pour le mélange à brûler, avant sa combustion ou oxydation catalytique.

Une vitre 23 en matériau céramique et transparent ferme, de manière étanche, une fenêtre 22 du boîtier 21, au regard de la face aval 3b de la paroi 3 de combustion catalytique. Ce boîtier 21 avec sa fenêtre 22 fermée par la vitre 23 ménage avec le foyer de combustion 2 un circuit 24 d'évacuation des fumées de combustion, sortant par la face aval 3b de la paroi 3 de combustion catalytique.

Le boîtier 21 comporte un chemisage intérieur 27, en matériau isolant et réfractaire, ménageant avec la chemise 16 du foyer de combustion 2, un interstice annulaire dans lequel les fumées de combustion 25 circulent à contre-courant du sens de passage du mélange à brûler 4.

Le circuit 24 d'évacuation des gaz brûlés est agencé pour évacuer ces derniers transversalement par rapport à la direction de passage du mélange à brûler 4, à travers un passage ( non représenté) dans le chemisage réfractaire 27, communiquant d'un côté avec l'interstice annulaire 24 entre chemise 16 et chemisage 27, et d'un autre côté avec l'extérieur.

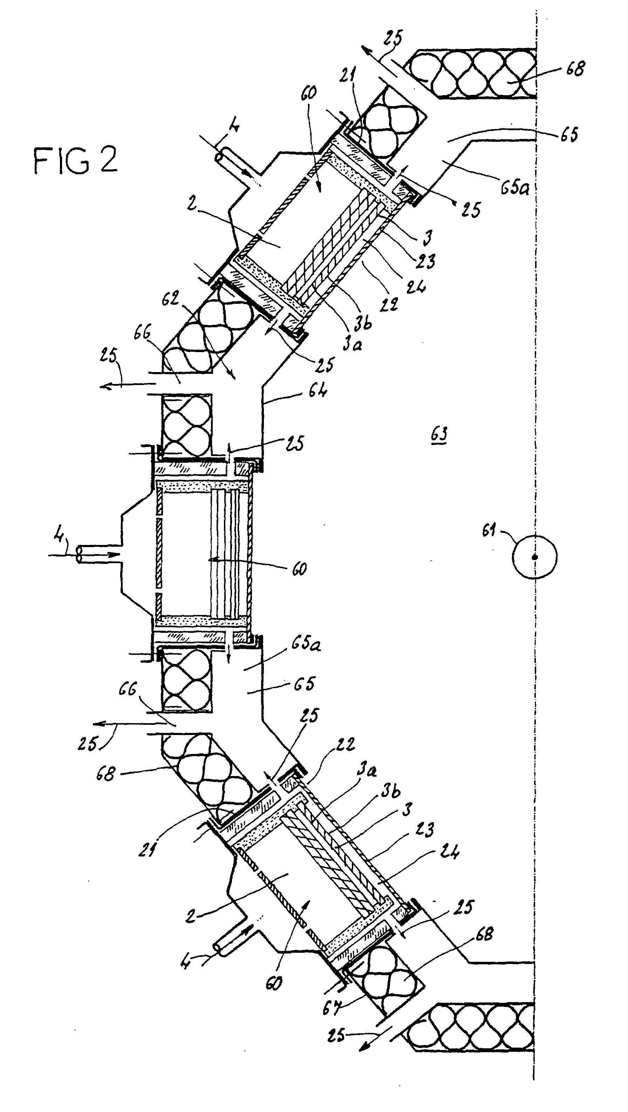

Conformément à la Figure 2, l'installation 63, d'émission surfacique d'un rayonnement infrarouge, comprend une paroi 62 isolée thermiquement, formant un tunnel allongé selon une direction de séjour ou circulation 61 d'au moins un objet à traiter avec le rayonnement infrarouge.

Une pluralité d'équipements unitaires 60, dont le dispositif d'émission surfacique a été décrit pour l'essentiel par référence à la Figure 1, sont disposés chacun par rapport à et dans la paroi 62 isolée thermiquement, en sorte que les faces aval 3b des différents dispositifs 1 respectivement émettent un rayonnement infrarouge élémentaire, dirigé vers l'intérieur du tunnel.

La paroi 62 isolée thermiquement comprend une tôle métallique 64 d'émission surfacique secondaire, directement en échange de chaleur (notamment par rayonnement) avec l'intérieur du tunnel. Cette tôle métallique 64 forme avec le reste de la paroi 62 un canal 65 de circulation à plat des fumées de combustion 25, communiquant d'un côté avec les circuits 24 d'évacuation des fumées de combustion 25 d'au moins une partie, sinon la totalité des équipements unitaires 60, et d'un autre côté, avec au moins un, sinon une pluralité, (en nombre identique à celle des équipements unitaires 60), de conduits 66 de sortie des fumées de combustion 25 à l'extérieur de la paroi 62 isolée thermiquement.

La paroi 62 isolée thermiquement comprend deux tôles métalliques 64 et 67, dont la tôle 64 précitée d'émission surfacique secondaire. Ces tôles sont entretoisées par les boîtiers 21 des dispositifs 1 d'émission des équipements unitaires 60 respectivement, et une garniture isolante 68 thermique est disposée entre les deux tôles 64 et 67, et ménage avec la tôle d'émission surfacique 64 le canal 65 de circulation à plat des fumées de combustion 25. Comme le montre bien la Figure 2, deux équipements unitaires 60 consécutifs sont séparés par un segment 65a du canal 65 de circulation à plat des gaz brûlés 25. Un tel segment communique de part et d'autre avec les circuits d'évacuation 24 des mêmes fumées de combustion 25 des deux équipements unitaires 60 consécutifs respectivement, et communique aussi à une autre extrémité avec un conduit commun 66 de sortie des fumées de combustion 25.

Comme le montre bien la Figure 1, le circuit 24 d'évacuation des gaz brûlés du dispositif d'émission surfacique 1 de chaque équipement
unitaire 60 est agencé pour évacuer les dits gaz brûlés, transversalement par rapport à la direction de passage du mélange à brûler 4, de part et d'autre du boîtier 21, dans le canai 65 de circulation à plat des fumées de combustion.

Comme le montrent bien, en combinaison, les Figures 1 et 2, la pluralité de vitres 23 ferment les fenêtres 22, ménagées dans les boîtiers 21 des dispositifs 1 des équipements unitaires 60 respectivement, pour ménager dans chacun, et pour partie, les différents circuits 24 d'évacuation des fumées de combustion 25, communiquant avec le canal 65 de circulation à plat de ces dernières.

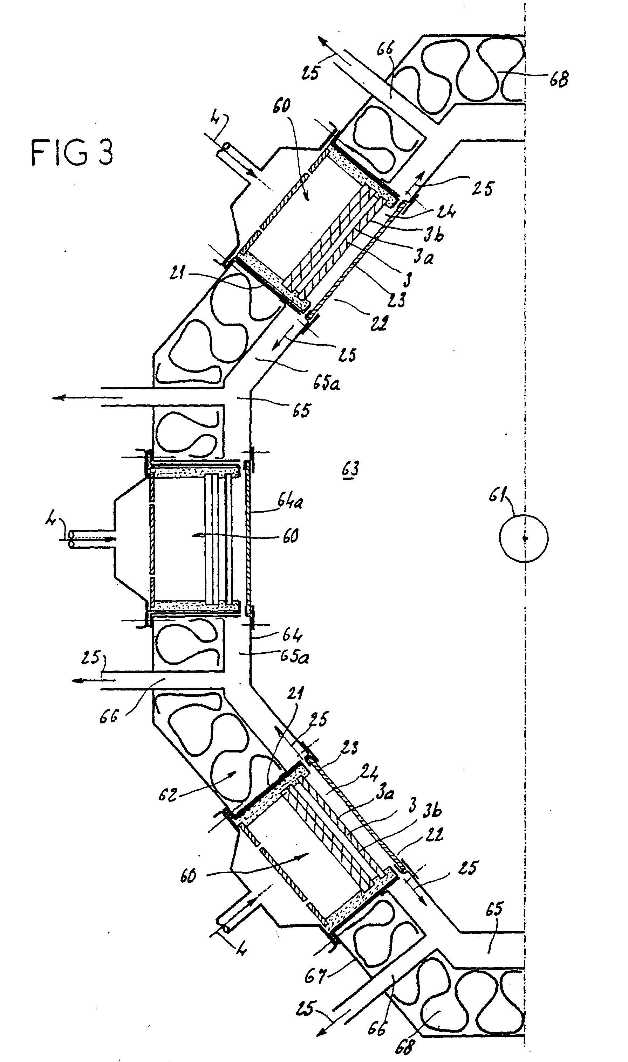

L'installation représentée à la Figure 3, diffère de celle décrite par référence aux Figures 2 et 1, par le fait que la pluralité de vitres 23 sont disposées dans la paroi 62 isolée thermiquement. A cette fin, la pluralité des vitres 23 ferment des ouvertures 22, ménagées dans la tôle 64 d'émission surfacique, en face respectivement des faces aval 3b des dispositifs 1 des équipements unitaires 60, en assurant ainsi une continuité d'écoulement des fumées de combustion entre le canal de circulation à plat 65, et les circuits 24 d'évacuation des dispositifs 1 des différents équipements unitaires 60 respectivement.

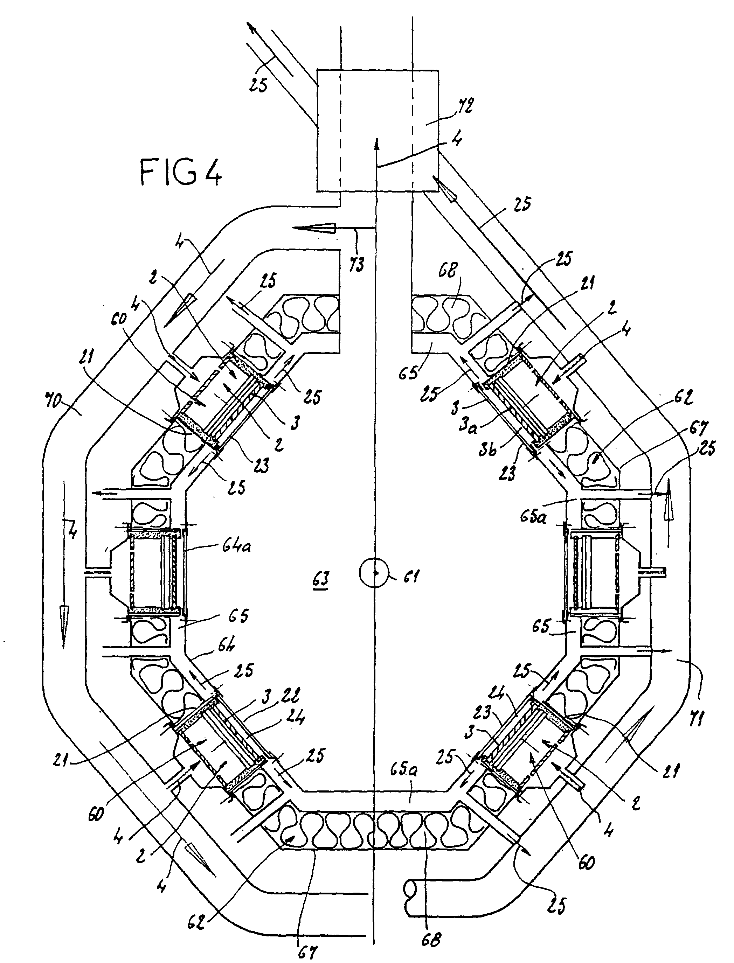

L'installation 63 ou équipement conforme à la Figure 4 diffère de celle décrite par référence à la Figure 3, en ce qu'elle comprend un distributeur 70 du mélange à brûler 4, vers les différents équipements unitaires 60 d'émission surfacique respectivement, et un collecteur 71 des fumées de combustion 25 des différents conduits d'évacuation 66 desdites 25 fumées. Un échangeur 72 de chaleur entre les fumées de combustion 25 collectées et le mélange à brûler 4 distribué, est également disposé à la sortie du tunnel. Et au moins une partie 73 du flux d'air résiduel évacué, pouvant comprendre des composés organiques volatils (COV), est mélangé au mélange à brûler 4 distribué. Cette dernière disposition permet en particulier, d'une part de disposer de la chaleur résiduelle des gaz brûlés pour maintenir chaudes les différentes parois«de combustion catalytique 3 des dispositifs 1 des différents équipements unitaires 60, et d'autre part de brûler les COV dans ces équipements unitaires 60, ce qui permet au passage une dépollution des gaz résiduels.

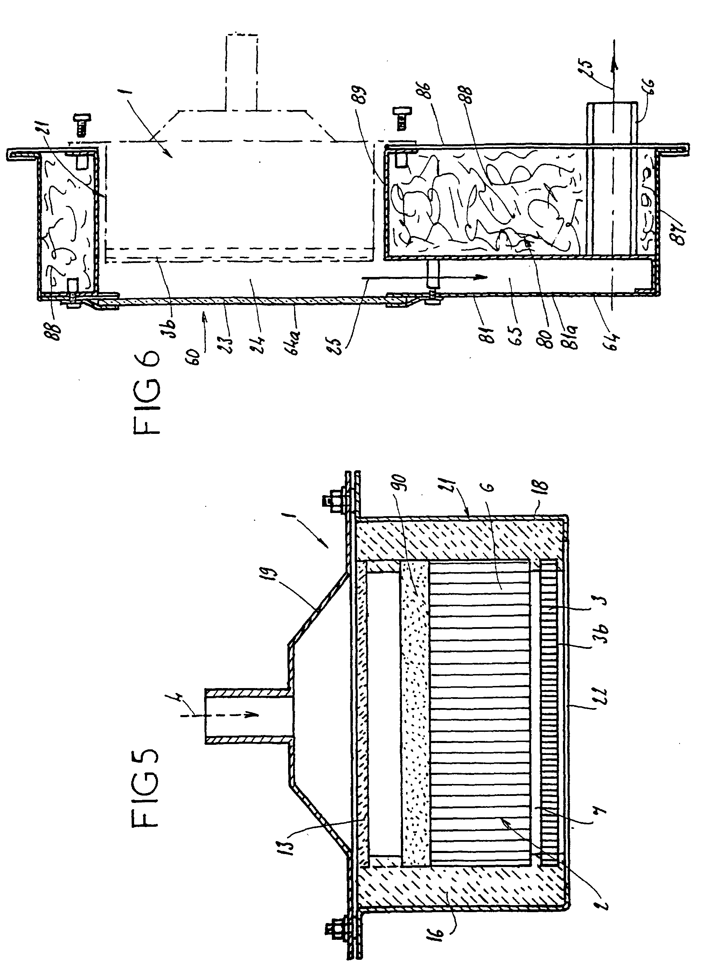

Toute installation 63 du type tunnel, peut comprendre ou intégrer, en lieu et place des équipements unitaires précédemment décrits, des équipements unitaires tels que décrits ci-après par référence aux Figures 5 et 6.

Le dispositif 1 d'émission surfacique représenté à la Figure 5 diffère de celui décrit précédemment par référence à la Figure 1, par les caractéristiques suivantes :
- la paroi d'isolation thermique 8 et le diffuseur 11 constituent un seul et même composant 90, par exemple une paroi en mousse céramique, laquelle est accolée à la paroi 6 d'échange thermique, relativement épaisse, c'est-à-dire relativement longue selon la direction de circulation du mélange à brûler 4 ;
- le chemisage intérieur 27 est supprimé, de telle sorte que la chemise intérieure 16 se trouve directement au contact du boîtier 21, et l'interstice existant entre la chemise 16 et le chemisage 27 se trouve supprimé ;
- la vitre 23 est supprimée, de telle sorte que la fenêtre 22 demeure ouverte pour le passage des fumées de combustion 25.

Un équipement unitaire 60 d'émission surfacique, conforme à la Figure 6, comprend un caisson 80 délimité pour partie par une paroi métallique 81, laquelle comporte une fenêtre 24 fermée par une vitre 23, et une partie adjacente 81a d'émission surfacique secondaire formant pour partie un canal 65 de circulation à plat des fumées de combustion 25. Pour le reste, le caisson 80 est délimité par une paroi métallique transversale 87, dont l'ouverture est fermée par une plaque métallique 86 sertie sur la paroi latérale 87. Le dispositif 1 d'émission surfacique, décrit précédemment par référence à la Figure 5, est disposé au sein du caisson 80, en sorte que la face aval 3b de la paroi 3 de combustion catalytique soit en vis-à-vis de la vitre 23, en ménageant avec cette dernière un circuit 24 d'évacuation des fumées 25 de combustion. Ce circuit 24 communique avec le canal 65 de circulation à plat des fumées de combustion, lequel est délimité par ailleurs par une cloison interne 89 disposée au sein du caisson 80. Une sortie 66 des fumées de combustion est disposée sur le caisson 80, et communique avec une extrémité du canal 65 de circulation à plat, opposée au circuit 24 d'évacuation des fumées de combustion 25 à partir du dispositif 1. Pour le reste, les parties creuses du caisson 80 sont remplies avec un bourrage 88 d'isolation thermique.

## Revendications

1. Equipement (60) d'émission surfacique d'un rayonnement infrarouge, pour traiter un objet avec ledit rayonnement infrarouge, comprenant au moins un dispositif (1) d'émission surfacique, disposé en sorte que sa face (3b) émettant le rayonnement infrarouge soit dirigée vers ledit objet, ledit dispositif (1) d'émission surfacique comprenant un foyer de combustion (2) catalytique comportant une paroi (3) de combustion catalytique, en matériau réfractaire, perméable selon son épaisseur, adaptée pour le passage d'un mélange à brûler (4) , de sa face amont (3a) à sa face aval (3b) émettant ledit rayonnement infrarouge et évacuant les fumées de combustion (25), et le dit dispositif (1) d'émission surfacique comprenant un boîtier (21), dans lequel le foyer (2) de combustion catalytique est disposé au moins pour partie, et danslequel est ménagée une fenêtre (22) au regard de la face aval (3b) de la paroi (3) de combustion catalytique, **caractérisé en ce que**, d'une part au moins une vitre (23) en matériau céramique et transparent est montée, par exemple dans le boîtier (21) du dispositif (1) d'émission surfacique, en sorte de ménager avec le foyer (2) de combustion catalytique un circuit (24) d'évacuation des fumées de combustion (25) sortant par la face aval (3b) dudit dispositif (1) d'émission surfacique, et d'autre part ledit équipement comprend une tôle (64) métallique d'émission surfacique secondaire, formant un canal (65) de circulation à plat des fumées de combustion (25), communiquant d'un côté avec le circuit (24) d'évacuation des fumées de combustion (25) du dispositif (1) d'émission surfacique, et d'un autre côté avec au moins un conduit de sortie (66) des fumées de combustion (25) à l'extérieur de l'équipement.

2. Equipement selon la revendication 1, **caractérisé en ce que** le circuit (24) d'évacuation des fumées de combustion du dispositif (1) d'émission surfacique est agencé pour évacuer ces derniers, transversalement par rapport à la direction de passage du mélange à brûler (4),à l'extérieur du boîtier (21), dans le canal (65) de circulation à plat des gaz brûlés.

3. Equipement selon la revendication 2, **caractérisé en ce que** la vitre (23) ferme la fenêtre (22) du boîtier (21) du dispositif (1) d'émission surfacique, en ménageant pour partie le circuit (24) d'évacuation des fumées de combustion.

4. Equipement selon la revendication 2, **caractérisé en ce que** la vitre (23) ferme une ouverture (64a), ménagée dans la tôle (64) d'émission surfacique secondaire, en face de la face aval (3b) du dispositif (1) d'émission surfacique, en assurant une continuité d'écoulement des fumées (25) de combustion entre le canal (65) de circulation à plat et le circuit d'évacuation (24) du dispositif (1) d'émission surfacique.

5. Installation (63) comprenant une paroi (62) isolée thermiquement, formant un tunnel allongé selon une direction de séjour (61) d'au moins un objet à traiter avec le rayonnement infrarouge, et une pluralité d'équipements unitaires (60) d'émission surfacique, selon la revendication 1, disposés chacun par rapport et dans la paroi (62) isolée thermiquement, en sorte que leur face (3b) émettant le rayonnement infrarouge soit dirigée vers l'intérieur du tunnel (63), **caractérisé en ce que**, en combinaison :
- chaque équipement unitaire (60) est disposé dans la paroi (62) isolée thermiquement ;
- une pluralité de vitres (23) sont montées, ou dans les boîtiers (21) des équipements unitaires (60) respectivement, ou dans la paroi (62) isolée thermiquement, en sorte de ménager une pluralité de circuits (24) d'évacuation des gaz brûlés ;
- la paroi (62) isolée thermiquement comprend une tôle (64) directement en échange de chaleur avec l'intérieur du tunnel, formant avec le reste de la paroi (62) un canal (65) de circulation à plat des fumées de combustion d'au moins une partie des dispositifs (1) d'émission surfacique des équipements unitaires (60), et d'un autre côté avec l'extérieur de la paroi (62) isolée thermiquement.

6. Installation selon la revendication 5, **caractérisée en ce que** la paroi (62) isolée thermiquement comprend deux tôles métalliques, dont la tôle (64) d'émission surfacique secondaire, entretoisées par les boîtiers (21) des dispositifs (1) d'émission surfacique des équipements unitaires (60) respectivement, et une garniture isolante (68) disposée entre les deux tôles, et ménageant avec la tôle d'émission surfacique le canal (65) de circulation à plat des fumées de combustion (25).

7. Installation selon la revendication 5, **caractérisé en ce que** deux équipements unitaires (60) d'émission surfacique consécutifs sont séparés par un segment (65a) du canal (65) de circulation à plat des gaz brûlés (25), communiquant de part et d'autre avec les circuits d'évacuation (24) des mêmes fumées de combustion (25) des deux équipements unitaires (60) consécutifs respectivement, et communiquant aussi avec un conduit commun (66) de sortie des fumées de combustion (25).

8. Installation selon la revendication 5, **caractérisé en ce qu'**elle comprend un distributeur (70) du mélange à brûler (4), vers les équipements unitaires (1) d'émission surfacique respectivement, et un collecteur (71) des fumées de combustion (25) des différents conduits d'évacuation desdites fumées.

9. Installation selon la revendication 8, **caractérisé en ce qu'**elle comprend un échangeur de chaleur (72) entre les fumées de combustion (25) collectées et le mélange à brûler (4) distribué.

10. Installation selon la revendication 7, **caractérisé en ce qu'**au moins une partie (73) du flux d'air résiduel évacué est mélangé au mélange à brûler (4) distribué.

11. Equipement unitaire selon la revendication 1, **caractérisé en ce qu'**il comprend un caisson (80) délimité pour partie par une paroi métallique (81), laquelle comporte une fenêtre (24) fermée par une vitre (23) et une partie adjacente (81a) d'émission surfacique secondaire, formant pour partie un canal (65) de circulation à plat des fumées de combustion (25), le dispositif (1) d'émission surfacique étant disposé au sein dudit caisson en sorte que la face aval (3b) de la paroi (3) de combustion catalytique soit en vis-à-vis de la vitre, en ménageant avec cette dernière, un circuit (24) d'évacuation des fumées (25) de combustion communiquant avec ledit canal (65) de circulation à plat, et une sortie (66) des fumées de combustion étant disposée sur ledit caisson, et communiquant avec une extrémité dudit canal (65) de circulation à plat, opposée au circuit (24) d'évacuation des fumées de combustion (25).

## Patentansprüche

1. Ausrüstung (60) für eine Oberflächenemission einer Infrarotstrahlung, um ein Objekt mit der Infrarotstrahlung zu behandeln, mit zumindest einer Vorrichtung (1) für eine Oberflächenemission, die derart angeordnet ist, dass ihre Seite (3b), die die Infrarotstrahlung emittiert, zu dem Objekt hin gerichtet ist, wobei die Vorrichtung (1) für die Oberflächenemission einen Brennraum (2) für eine katalytische Verbrennung aufweist, der eine Wand (3) für eine katalytische Verbrennung aus feuerfestem Material aufweist, die gemäß ihrer Dicke durchlässig und für den Durchgang eines zu verbrennenden Gemisches (4) von ihrer stromaufwärtigen Seite (3a) zu ihrer stromabwärtigen Seite (3b), die die Infrarotstrahlung emittiert und die Verbrennungsabgase (25) evakuiert, ausgelegt ist, und wobei die Vorrichtung (1) für die Oberflächenemission ein Gehäuse (21) aufweist, in dem der Brennraum (2) für die katalytische Verbrennung zumindest teilweise angeordnet ist, und in dem ein der stromabwärtigen Seite (3b) der Wand (3) für die katalytische Verbrennung gegenüberliegendes Fenster (22) ausgebildet ist, **dadurch gekennzeichnet, dass** einerseits zumindest eine transparente Scheibe (23) aus keramischem Material beispielsweise in dem Gehäuse (21) der Vorrichtung (1) für die Oberflächenemission angebracht ist, derart, dass mit dem Brennraum (2) für die katalytische Verbrennung ein Entleerungskreis (24) für die Entleerung der Verbrennungsabgase (25), die durch die stromabwärtige Seite (3b) der Vorrichtung (1) für die Oberflächenemission heraustreten, ausgebildet wird, und dass andererseits die Ausrüstung ein metallisches Blech (64) für eine sekundäre Oberflächenemission aufweist, das einen Zirkulationskanal (65) für eine Abzugszirkulation der Verbrennungsabgase (25) bildet, der auf einer Seite mit dem Entleerungskreis (24) für die Verbrennungsabgase (25) der Vorrichtung (1) für die Oberflächenemission und auf einer anderen Seite mit zumindest einer Austrittsleitung (66) für die Verbrennungsabgase (25) in den Außenraum der Ausrüstung kommuniziert.

2. Ausrüstung nach Anspruch 1, **dadurch gekennzeichnet, dass** der Entleerungskreis (24) für die Verbrennungsabgase der Vorrichtung (1) für die Oberflächenemission so ausgestaltet ist, dass letztere quer bezüglich der Richtung des Durchgangs des zu verbrennenden Gemisches (4) im Außenraum des Gehäuses (21) in den Zirkulationskanal (65) für die Abzugszirkulation der verbrannten Gase entleert werden.

3. Ausrüstung nach Anspruch 2, **dadurch gekennzeichnet, dass** die Scheibe (23) das Fenster (22) des Gehäuses (21) der Vorrichtung (1) für die Oberflächenemission schließt, wodurch sie zum Teil den Entleerungskreis (24) für die Verbrennungsabgase ausbildet.

4. Ausrüstung nach Anspruch 2, **dadurch gekennzeichnet, dass** die Scheibe (23) eine Öffnung (64a) verschließt, die in dem Blech (64) für die sekundäre Oberflächenemission der stromabwärtigen Seite (3b) der Vorrichtung (1) für die Oberflächenemission zugewandt ausgebildet ist, wodurch eine Kontinuität der Zirkulation der Verbrennungsabgase (25) zwischen dem Zirkulationskanal (65) für die Abzugszirkulation und dem Entleerungskreis (24) der Vorrichtung (1) für die Oberflächenemission gewährleistet ist.

5. Einrichtung (63), mit einer thermisch isolierten Wand (62), die einen gemäß einer Richtung eines Aufenthaltsortes (61) zumindest eines mit der Infrarotstrahlung zu behandelnden Objekts länglichen Tunnel bildet, und einer Mehrzahl von einzelnen Ausrüstungen (60) für eine Oberflächenemission gemäß Anspruch 1, die jeweils versetzt und in der thermisch isolierten Wand (62) angeordnet sind, derart, dass ihre die Infrarotstrahlung emittierende Seite (3b) zum Innenraum des Tunnels (63) hin gerichtet ist, **dadurch gekennzeichnet, dass** in Kombination:
- jede einzelne Ausrüstung (60) in der thermisch isolierten Wand (62) angeordnet ist;
- eine Mehrzahl von Scheiben (23) in den jeweiligen Gehäusen (21) der einzelnen Ausrüstungen (60) oder in der thermisch isolierten Wand (62) angebracht sind, derart, dass eine Mehrzahl von Entleerungskreisen (24) für die verbrannten Gase ausgebildet sind;
- die thermisch isolierte Wand (62) ein unmittelbar im Wärmeaustausch mit dem Innenraum des Tunnels stehendes Blech (64) aufweist, die mit dem übrigen Teil der Wand (62) und auf einer anderen Seite mit dem Außenraum der thermisch isolierten Wand (62) einen Zirkulationskanal (65) für die Abzugszirkulation der Verbrennungsgase zumindest eines Teils der Vorrichtungen (1) für die Oberflächenemission der einzelnen Ausrüstungen (60) bildet.

6. Einrichtung nach Anspruch 5, **dadurch gekennzeichnet, dass** die thermisch isolierte Wand (62) zwei metallische Bleche, darunter das Blech (64) für die sekundäre Oberflächenemission, die durch die Gehäuse (21) der Vorrichtungen (1) für die Oberflächenemission der jeweiligen einzelnen Ausrüstungen (60) verstrebt sind, und eine Isolierung (68) aufweist, die zwischen den beiden Blechen angeordnet ist, und mit dem Blech für die Oberflächenemission den Zirkulationskanal (65) für die Abzugszirkulation der Verbrennungsabgase (25) ausbildet.

7. Einrichtung nach Anspruch 5, **dadurch gekennzeichnet, dass** zwei aufeinander folgende einzelne Ausrüstungen (60) für die Oberflächenemission durch ein Segment (65a) des Zirkulationskanals (65) für die Abzugszirkulation der verbrannten Gase (25) getrennt sind, der beidseits mit den Entleerungskreisen (24) für dieselben Verbrennungsabgase (25) der beiden jeweiligen aufeinander folgenden einzelnen Ausrüstungen (60) kommuniziert und außerdem mit einer gemeinsamen Austrittsleitung (66) für den Austritt der Verbrennungsabgase (25) kommuniziert.

8. Einrichtung nach Anspruch 5, **dadurch gekennzeichnet, dass** sie eine Verteilereinrichtung (70) zum Verteilen des zu verbrennenden Gemisches (4) auf die jeweiligen einzelnen Ausrüstungen (1) für die Oberflächenemission und eine Sammeleinrichtung (71) für die Verbrennungsabgase (25) der verschiedenen Entleerungsleitungen der Abgase aufweist.

9. Einrichtung nach Anspruch 8, **dadurch gekennzeichnet, dass** sie einen Wärmetauscher (72) zwischen den gesammelten Verbrennungsabgasen (25) und dem verteilten zu verbrennenden Gemisch (4) aufweist.

10. Einrichtung nach Anspruch 7, **dadurch gekennzeichnet, dass** zumindest ein Teil (73) des entleerten Residualluftflusses mit dem verteilten zu verbrennenden Gemisch (4) gemischt wird.

11. Einzelne Ausrüstung nach Anspruch 1, **dadurch gekennzeichnet, dass** sie einen zum Teil durch eine metallische Wand (81) begrenzten Kasten (80) aufweist, die ein Fenster (24) aufweist, das durch eine Scheibe (23) und einen benachbarten Abschnitt (81a) für eine sekundäre Oberflächenemission geschlossen ist, der zum Teil einen Zirkulationskanal (65) für die Abzugszirkulation der Verbrennungsabgase (25) bildet, wobei die Vorrichtung (1) für die Oberflächenemission innerhalb des Kastens derart angeordnet ist, dass die stromabwärtige Seite (3b) der Wand (3) für die katalytische Verbrennung der Scheibe gegenüberliegt, wodurch mit dieser letzteren ein Entleerungskreis (24) für die Verbrennungsabgase (25) ausgebildet ist, der mit dem Zirkulationskanal (65) für die Abzugszirkulation kommuniziert, und wobei ein Austritt (66) für die Verbrennungsabgase an dem Kasten angeordnet ist, und der mit einem Ende des Zirkulationskanals (65) für die Abzugszirkulation kommuniziert, das dem Entleerungskreis (24) für die Verbrennungsabgase (25) entgegengesetzt ist.

## Claims

1. Equipment (60) for the surface emission of infrared radiation for treating an object with the said infrared radiation, comprising at least one surface emission device (1) arranged in such a way that its face (3b) emitting the infrared radiation faces towards said object, the said surface emission device (1) comprising a seat of catalytic combustion (2) comprising a catalytic combustion wall (3) made of refractory material permeable along its thickness and designed for the passage of a mixture (4) for burning from its upstream face (3a) to its downstream face (3b) emitting the said infrared radiation and discharging the flue gases (25), and the said surface emission device (1) comprising a box (21) in which the seat of catalytic combustion (2) is arranged at least in part, and in which there is formed an opening (22) facing the downstream face (3b) of the catalytic combustion wall (3), **characterized in that**, on the one hand, at least one window pane (23) made of transparent ceramic material is mounted, for example in the box (21) of the surface emission device (1), so as to form, with the seat of catalytic combustion (2), a circuit (24) for discharging the flue gases (25) leaving via the downstream face (3b) of the said surface emission device (1), and, on the other hand, the said equipment comprises a secondary surface emission metal sheet (64) forming a flat circulation channel (65) for the flue gases (25) and communicating on the one side with the circuit (24) for discharging the flue gases (25) of the surface emission device (1) and, on the other side, with at least one outlet pipe (66) for transferring the flue gases (25) out of the equipment.

2. Equipment according to Claim 1, **characterized in that** the flue gases discharge circuit (24) of the surface emission device (1) is arranged to discharge these gases transversely with respect to the direction in which the mixture for burning (4) passes, outside the box (21), in the burnt gases flat circulation channel (65).

3. Equipment according to Claim 2, **characterized in that** the window pane (23) closes the opening (22) in the box (21) of the surface emission device (1), partially forming the flue gases discharge circuit (24).

4. Equipment according to Claim 2, **characterized in that** the window pane (23) closes an aperture (64a) formed in the secondary surface emission sheet (64), facing the downstream face (3b) of the surface emission device (1), ensuring continuity of the flow of flue gases (25) between the flat circulation channel (64) and the discharge circuit (24) of the surface emission device (1).

5. Installation (63) comprising a thermally insulated wall (62) forming a tunnel which is elongate in a residence direction (61) of at least one object that is to be treated with the infrared radiation, and a number of unitary surface emission equipments (60) according to Claim 1, each arranged with respect to and in the thermally insulated wall (62) in such a way that their face (3b) emitting the infrared radiation faces towards the inside of the tunnel (63), **characterized in that**, in combination:
- each unitary item of equipment (60) is arranged in the thermally insulated wall (62);
- a number of window panes (23) are mounted, either in the boxes (21) of the unitary items of equipment (60) respectively, or in the thermally insulated wall (62), so as to form a number of burnt gas discharge circuits (24);
- the thermally insulated wall (62) comprises a sheet (64) in a direct heat-exchange relationship with the inside of the tunnel, forming with the rest of the wall (62), a channel (65) for the flat circulation of the flue gases from at least some of the surface emission devices (1) of the unitary items of equipment (60) and, on the other side, with the outside of the thermally insulated wall (62).

6. Installation according to Claim 5, **characterized in that** the thermally insulated wall (62) comprises two metal sheets, including the secondary surface emission sheet (64), which are spaced apart by the boxes (21) of the surface emission devices (1) of the respective unitary items of equipment (60), and an insulating lining (68) arranged between the two sheets and forming, with the surface emission sheet, the channel (65) for the flat circulation of the flue gases (25).

7. Installation according to Claim 5, **characterized in that** two consecutive unitary surface emission equipments (60) are separated by a segment (65a) of the channel (65) for the flat circulation of the burnt gases (25) communicating, at each end, with the circuits (24) for discharging these same flue gases (25) of the two consecutive unitary equipments (60) respectively and also communicating with a common outlet pipe (66) for letting out the flue gases (25).

8. Installation according to Claim 5, **characterized in that** it comprises a distributor (70) for distributing the mixture (4) for burning to the unitary surface emission equipments (1) respectively, and a manifold (71) for collecting the flue gases (25) from the various flue gas discharge pipes.

9. Installation according to Claim 8, **characterized in that** it comprises a heat exchanger (72) for exchanging heat between the collected flue gases (25) and the distributed mixture (4) for burning.

10. Installation according to Claim 7, **characterized in that** at least part (73) of the residual air stream discharged is mixed with the distributed mixture (4) for burning.

11. Unitary equipment according to Claim 1, **characterized in that** it comprises a casing (80) delimited in part by a metal wall (81) which has an opening (24) closed by a window pane (23) and an adjacent secondary surface emission part (81a), partially forming a channel (65) for the flat circulation of flue gases (25), the surface emission device (1) being arranged within the said casing in such a way that the downstream face (3b) of the catalytic combustion wall (3) faces the window pane, forming therewith a circuit (24) for discharging the flue gases (25) communicating with the said flat circulation channel (65), and an outlet (66) for the flue gases being arranged on the said casing and communicating with one end of the said flat circulation channel (65) which is the opposite end to the circuit (24) for discharging the flue gases (25).
